# FASCICULE DE BREVET EUROPEEN

(11) **EP 2 038 532 B1**
(45) Date de publication et mention de la délivrance du brevet: **07.10.2009**
(21) Numéro de dépôt: 07803838.7
(22) Date de dépôt: 04.07.2007
(51) Int. Cl.: F02C 7/04

(54) **ENTREE D'AIR POUR TURBOMOTEUR D'AERONEF**
LUFTANSAUGUNG FÜR EIN FLUG-TL-TRIEBWERK
AIR INTAKE FOR AN AIRCRAFT TURBINE ENGINE

(30) Priorité: 12.07.2006 FR 0606334
(43) Date de publication de la demande: 25.03.2009
(73) Titulaire: AIRBUS OPERATIONS, 31060 Toulouse (FR)
(72) Inventeur: PORTE, Alain, F-31770 Colomiers (FR); LALANE, Jacques, F-31650 Saint Orens de Gameville (FR); GANTIE, Fabrice, F-31000 Toulouse (FR)
(74) Mandataire: Bonnetat, Christian
(86) Numéro de dépôt international: PCT/FR2007/001132
(87) Numéro de publication internationale: WO 2008/006959

(56) Documents cités:
- EP-A- 1 591 643
- EP-A1- 0 898 063
- EP-A1- 1 369 555
- GB-A- 2 010 434

## Description

La présente invention concerne les turbomoteurs pour aéronef et, plus spécialement, l'entrée d'air d'un tel turbomoteur.

Dans les turbomoteurs connus, la paroi interne de l'entrée d'air et le carter de la soufflante sont métalliques et l'extrémité arrière de ladite paroi interne de l'entrée d'air et l'extrémité avant dudit carter de soufflante portent des brides périphériques saillantes coopérantes permettant leur solidarisation à l'aide d'éléments de fixation tels que vis, boulons, etc ... dont les axes sont parallèles à l'axe longitudinal du turbomoteur et qui traversent lesdites brides. Un turbomoteur selon l'art antérieur est présenté dans le document GB 2010 434.

Etant donné les propriétés mécaniques, thermiques et massiques des matières composites fibres/résine, il serait avantageux de pouvoir réaliser entièrement ladite paroi interne de l'entrée d'air sous la forme d'une pièce d'une telle matière composite. Toutefois, les essais effectués dans ce sens ne se sont pas révélés intéressants du fait que, à l'usage, il se produit un délaminage des fibres au niveau du coude de raccord à 90° entre ladite bride périphérique et le reste tubulaire de ladite paroi interne, délaminage qui entraîne une baisse importante de la résistance mécanique de ladite pièce et même la rupture de cette dernière.

La présente invention a pour objet de remédier à cet inconvénient.

A cette fin, selon l'invention, le turbomoteur pour aéronef présentant un axe longitudinal et comportant :
- une entrée d'air, pourvue d'une paroi interne tubulaire ; et
- une soufflante, alimentée en air par ladite entrée d'air et enfermée dans un carter, également tubulaire,
l'extrémité arrière de ladite paroi interne de l'entrée d'air et l'extrémité avant dudit carter de la soufflante étant respectivement pourvues de brides de raccordement périphériquement saillantes et étant solidarisées l'une de l'autre à l'aide de premiers éléments de fixation, tels que vis, boulons ou analogue, qui traversent lesdites brides et dont les axes sont au moins approximativement parallèles audit axe longitudinal du turbomoteur,
est remarquable en ce que :
- ladite paroi interne de l'entrée d'air, y compris la bride de raccordement de ladite extrémité arrière, est réalisée en une unique pièce de matière composite fibres/résine ;
- du côté opposé à l'extrémité avant dudit carter, la bride périphériquement saillante de ladite extrémité arrière est raccordée à ladite paroi interne par un profil annulaire au moins approximativement en forme de cavet ;
- un anneau de renfort est rapporté à ladite extrémité arrière, ledit anneau de renfort épousant ledit profil annulaire en forme au moins approximative de cavet et étant solidarisé de ladite extrémité arrière par des seconds éléments de fixation, dont les axes sont au moins approximativement orthogonaux audit axe longitudinal dudit turbomoteur ; et
- ledit anneau de renfort est traversé par lesdits premiers éléments de fixation et pressé contre lesdites brides.

Ainsi, grâce à la forme de la bride composite et à la présence dudit anneau de renfort, aucun délaminage ne peut se produire au coude de raccord entre ladite bride et le reste tubulaire de ladite paroi interne.

La matière composite peut être constituée de fibres de carbone, de verre, de bore, de carbure de silicium, etc ... Cependant, les fibres de carbone sont préférées. Par ailleurs, ladite pièce de matière composite peut être obtenue par tout procédé connu (enroulement filamentaire, bobinage, dépose de fibres imprégnées ou de tissus imprégnés, etc ...).

De préférence, pour renforcer encore la résistance de la pièce de matière composite, un renfort de matière composite, faisant partie intégrante de ladite pièce, est prévu sous ledit anneau de renfort, c'est-à-dire que, à cet endroit, l'épaisseur de ladite pièce de matière composite est plus grande qu'ailleurs.

Avantageusement, ledit anneau de renfort est métallique. L'expérience a montré que le titane était particulièrement approprié pour former ledit anneau de renfort.

Les figures du dessin annexé feront bien comprendre comment l'invention peut être réalisée. Sur ces figures, des références identiques désignent des éléments semblables.

La figure 1 montre, en demi-coupe schématique partielle, la partie avant d'un turbomoteur connu.

La figure 2 montre, également en demi-coupe schématique partielle, un exemple de solidarisation entre l'extrémité arrière de l'entrée d'air et l'extrémité avant du carter de soufflante, dans le turbomoteur connu de la figure 1.

La figure 3 montre, en vue semblable à la figure 2, un exemple de réalisation de l'invention.

La figure 4 est une vue partielle en perspective, avec arraché, d'éléments de la figure 3.

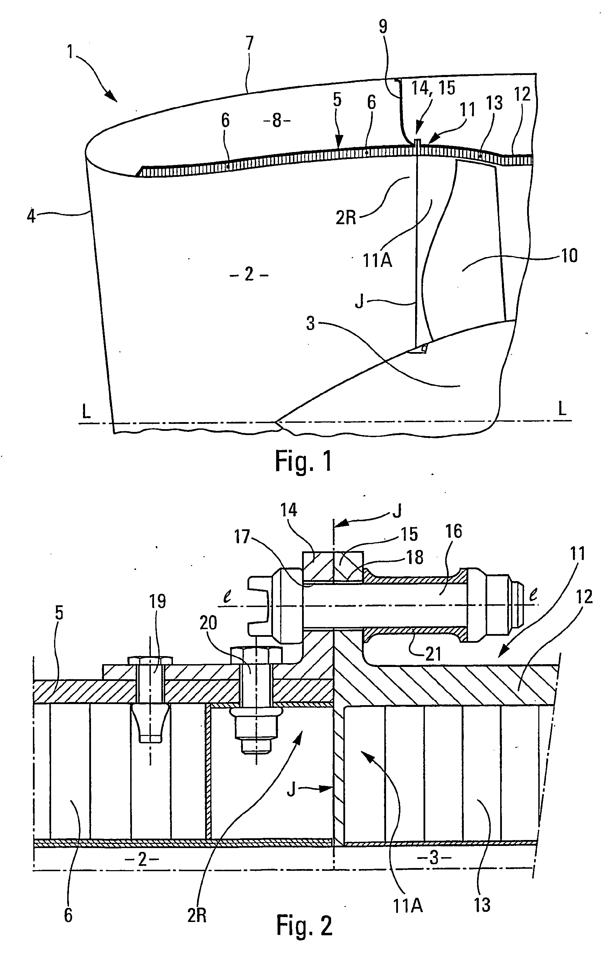

Le turbomoteur de type connu 1, dont la partie avant est schématiquement et partiellement montrée par la figure 1, comporte un axe longitudinal L-L. Cette partie avant comporte essentiellement une entrée d'air tubulaire 2 et une soufflante 3.

L'entrée d'air tubulaire 2 présente un bord d'attaque 4 et elle est pourvue d'une paroi interne tubulaire métallique 5, par exemple en aluminium, portant intérieurement un revêtement tubulaire d'atténuation acoustique 6. Un capot externe 7 entoure ladite entrée d'air et délimite avec ladite paroi interne 5 une chambre 8 à section annulaire, obturée par une cloison arrière annulaire 9 du côté opposé audit bord d'attaque 4.

La soufflante 3 comporte des pales 10 et est entourée par un carter de soufflante 11 constitué par une pièce tubulaire métallique 12, par exemple en aluminium, et portant intérieurement un revêtement tubulaire d'atténuation acoustique 13.

L'extrémité arrière 2R de l'entrée d'air 2 et l'extrémité avant 11 A du carter de soufflante 11 sont assemblées l'une à l'autre le long d'un plan de joint J.

Comme cela est montré à grande échelle sur la figure 2, l'assemblage des extrémités arrière 2R et avant 11 A est obtenu par deux brides annulaires coopérantes 14 et 15 faisant saillie vers l'extérieur à la périphérie de la paroi interne 5 et de la pièce tubulaire 12 et pressées l'une contre l'autre par des boulons 16 d'axes I-I parallèles à l'axe longitudinal L-L et traversant des perçages 17 et 18 en -regard, pratiqués dans lesdites brides 14 et 15. Dans l'exemple de réalisation connu de la figure 2, la bride annulaire 14 est rapportée à la paroi interne 5 et est solidarisée de celle-ci par des boulons 19 et 20. Au contraire, dans cet exemple, la bride 15 est usinée d'une seule pièce avec la pièce tubulaire 12.

Par ailleurs, à chaque boulon 16 est associée une bague 21, traversée par ledit boulon 16 et solidarisée par lui de la bride 15. Les bagues 21 sont réalisées de façon à pouvoir être comprimées axialement de façon plastique. Ainsi, lorsqu'une pale 10 de la soufflante 3 se brise et vient heurter le carter 11, l'énergie de la percussion peut être au moins en partie absorbée par la déformation desdites bagues 21.

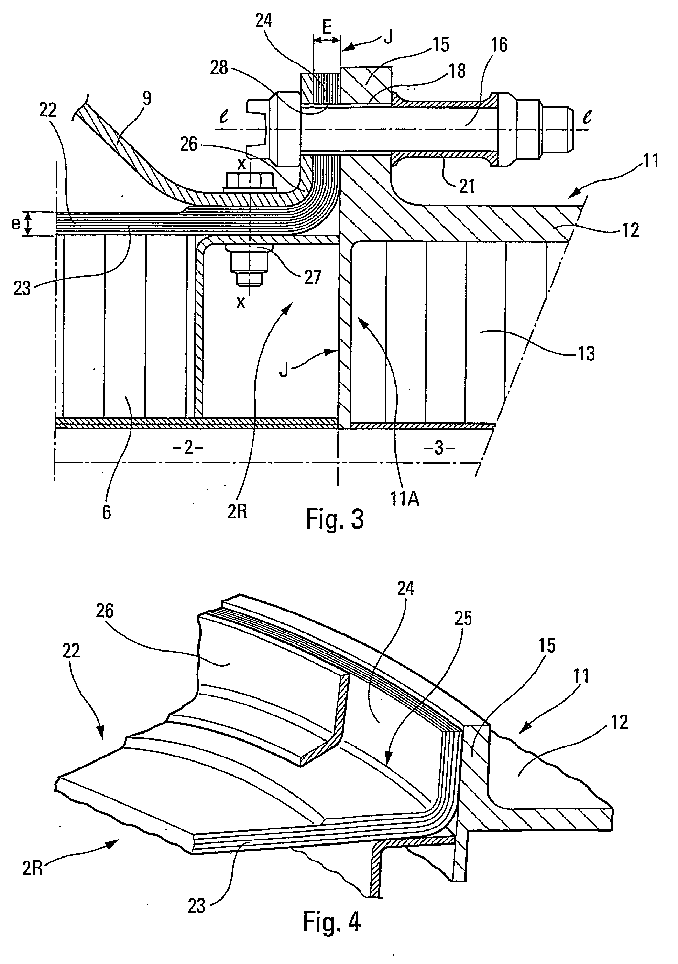

Dans l'exemple de réalisation conforme à la présente invention et représenté sur la figure 3, on retrouve les éléments 2, 2R, 3, 6, 9, 11 à 13, 11A, 15, 16, 18, 21 et J décrits ci-dessus en regard de la figure 2. En revanche, la paroi interne tubulaire 5 et la bride 14 en ont été éliminées et remplacées par une pièce unique de matière composite 22, de préférence à base de fibres de carbone, comportant une paroi interne tubulaire 23 (remplaçant la paroi interne tubulaire 5) et une bride 24 (remplaçant la bride 14).

Du côté opposé au carter de soufflante 11, la bride 24 se raccorde à la paroi tubulaire 23 par un cavet 25 (voir également la figure 4). De plus, ladite bride 24 et le cavet 25 sont renforcés par de la matière composite, de sorte que leur épaisseur E est plus grande que l'épaisseur e de la paroi tubulaire 23.

Un anneau de renfort 26, par exemple en titane, est rapporté sur ladite pièce composite 22, de manière à épouser ledit cavet 25, et est fixé à cette dernière par des boulons 27, d'axes x-x orthogonaux audit axe L-L. De plus, ledit anneau de renfort 26, par des trous 28 (analogues aux perçages 17), est traversé par les boulons 16 et est pressé contre les brides 15 et 24.

Eventuellement, l'anneau de renfort 26 peut se prolonger pour former la cloison arrière annulaire 9 (comme représenté sur la figure 3).

De préférence, les boulons 27 sont du type dit "aveugle" (blind bolt), de façon à ne pas nécessiter d'accès dans l'extrémité arrière 2R. Ainsi, il est possible d'étendre vers l'arrière le revêtement acoustique 6.

On remarquera que l'entrée d'air conforme à la présente invention ne présente aucune rupture d'impédance, ce qui permet d'améliorer l'atténuation globale du traitement acoustique.

## Revendications

1. Turbomoteur pour aéronef présentant un axe longitudinal (L-L) et comportant :
- une entrée d'air (2), pourvue d'une paroi interne tubulaire ; et
- une soufflante (3), alimentée en air par ladite entrée d'air et enfermée dans un carter (11), également tubulaire,
l'extrémité arrière de ladite paroi interne de l'entrée d'air et l'extrémité avant dudit carter de la soufflante étant respectivement pourvues de brides de raccordement périphériquement saillantes coopérantes et étant solidarisées l'une de l'autre à l'aide de premiers éléments de fixation (16), tels que vis, boulons ou analogue, qui traversent lesdites brides et dont les axes (ℓ-ℓ) sont au moins approximativement parallèles audit axe longitudinal (L-L) du turbomoteur, où:
- ladite paroi interne (23) de l'entrée d'air (2), y compris la bride de raccordement (24) de ladite extrémité arrière (2R), est formée par une pièce (22) réalisée en une matière composite fibres/résine ;
- du côté opposé à l'extrémité avant (11A) dudit carter (11), la bride périphériquement saillante (24) de ladite extrémité arrière (2R) est raccordée à ladite paroi interne (23) par un profil annulaire (25) au moins approximativement en forme de cavet ;
- un renfort (26) est rapporté à ladite extrémité arrière (2R), ledit renfort épousant ledit profil annulaire (25) en forme au moins approximative de cavet;
- ledit renfort (26) est traversé par lesdits premiers éléments de fixation (16) et pressé contre lesdites brides coopérantes (15, 24) et le turbomoteur est **caractérisé en ce que** le renfort est un anneau de renfort et **en ce que** ledit anneau de renfort est solidarisé de ladite extrémité arrière (2R) par des seconds éléments de fixation (27), dont les axes (x-x) sont au moins approximativement orthogonaux audit axe longitudinal (L-L) dudit turbomoteur.

2. Turbomoteur selon la revendication 1,
**caractérisé en ce que** ladite matière composite est à base de fibres de carbone.

3. Turbomoteur selon la revendication 1 ou 2,
**caractérisé en ce que**, sous ledit anneau de renfort (26), l'épaisseur (E) de ladite pièce de matière composite (22) est plus grande que dans le reste tubulaire de ladite paroi interne (23).

4. Turbomoteur selon l'une des revendications 1 à 3,
**caractérisé en ce que** ledit anneau de renfort (26) est métallique.

5. Turbomoteur selon la revendication 4,
**caractérisé en ce que** ledit anneau de renfort (26) est en titane.

6. Turbomoteur selon l'une des revendications 1 à 5,
**caractérisé en ce que** lesdits seconds éléments de fixation (27) sont aveugles.

## Claims

1. Aircraft turbine engine having a longitudinal axis (L-L) and comprising:
- an air intake (2) provided with a tubular internal wall; and
- a fan (3), supplied with air by said air intake and enclosed in a casing (11), which is likewise tubular,
the rear end of said internal wall of the air intake and the front end of said fan casing being respectively provided with peripherally projecting collaborating connection flanges and joined together using first fasteners (16) such as screws, bolts or the like, which pass through said flanges and of which the axes (1-1) are at least approximately parallel to said longitudinal axis (L-L) of the turbine engine, wherein:
- said internal wall (23) of the air intake (2), including the connection flange (24) of said rear end (2R), is formed of a component (22) made of a resin/fiber composite;
- on the opposite side to the front end (11A) of said casing (11), the peripherally projecting flange (24) of said rear end (2R) is connected to said internal wall (23) by an at least approximately cavetto-shaped annular profile (25) ; and
- a reinforcing member (26) is attached to said rear end (2R), said reinforcing member espousing said at least approximately cavetto-shaped annular profile (25) and said reinforcing member (26) having said first fasteners (16) passing through it and is pressed against said collaborating flanges (15, 24),
**characterized in that** said reinforcing member is a reinforcing ring and **in that** said reinforcing ring is secured to said rear end (2R) by second fasteners (27) the axes (x-x) of which are at least approximately orthogonal to said longitudinal axis (L-L) of said turbine engine.

2. Turbine engine according to claim 1,
**characterized in that** said composite is based on carbon fiber.

3. Turbine engine according to claim 1 or 2,
**characterized in that**, under said reinforcing ring (26), the thickness (E) of said component (22) made of composite is greater than in the tubular remainder of said internal wall (23).

4. Turbine engine according to one of claims 1 to 3,
**characterized in that** said reinforcing ring (26) is made of metal.

5. Turbine engine according to claim 4,
**characterized in that** said reinforcing ring (26) is made of titanium.

6. Turbine engine according to one of claims 1 to 5,
**characterized in that** said second fasteners (27) are blind.

## Patentansprüche

1. Eine Längsachse (LL) aufweisendes Triebwerk für ein Flugzeug, Folgendes umfassend:
- einen mit einer röhrenförmigen Innenwandung ausgestatteten Lufteinlass (2),
- ein Gebläse (3), das durch den Lufteinlass mit Luft versorgt wird und von einem ebenfalls röhrenförmigen Gehäuse (11) umschlossen ist,
wobei das hintere Ende der Innenwandung des Lufteinlasses und das vordere Ende des Gebläsegehäuses jeweils mit umfangsseitig vorstehenden, zusammenwirkenden Anschlussflanschen ausgestattet sind, die mithilfe von ersten Befestigungselementen (16), wie Schrauben, Bolzen oder dergleichen, welche die Flansche durchdringen und deren Achsen (ℓ-ℓ) zumindest annähernd parallel zur Längsachse (L-L) des Triebwerks verlaufen, fest miteinander verbunden sind, wobei bei dem Triebwerk:
- die Innenwandung (23) des Lufteinlasses (2) einschließlich des Anschlussflansches (24) des hinteren Endes (2R) durch ein aus einem Faser-Harz-Verbundwerkstoff hergestelltes Teil (22) gebildet ist,
- auf der dem vorderen Ende (11A) des Gehäuses (11) gegenüberliegenden Seite der umfangsseitig vorstehende Flansch (24) des hinteren Endes (2R) durch ein ringförmiges, zumindest annähernd hohlkehlenförmiges Profil (25) mit der Innenwandung (23) verbunden ist,
- eine Verstärkung (26) an das hintere Ende (2R) angeformt ist, wobei die Verstärkung an das ringförmige, zumindest annähernd hohlkehlenförmige Profil (25) angepasst ist, die Verstärkung (26) von den ersten Befestigungselementen (16) durchsetzt und gegen die zusammenwirkenden Flanschelemente (15,24) gepresst wird und das Triebwerk **dadurch gekennzeichnet ist, dass** die Verstärkung ein Verstärkungsring ist und dadurch, dass der Verstärkungsring durch zweite Befestigungselemente (27), deren Achsen (x-x) zumindest annähernd orthogonal zur Längsachse (L-L) des Triebwerks verlaufen, fest mit dem hinteren Ende (2R) verbunden ist.

2. Triebwerk nach Anspruch 1,
**dadurch gekennzeichnet, dass** der Verbundwerkstoff ein Kohlenfaserverbundwerkstoff ist.

3. Triebwerk nach Anspruch 1 oder 2,
**dadurch gekennzeichnet, dass** die Dicke (E) des Verbundwerkstoffteils (22) unter dem Verstärkungsring (26) größer, als im übrigen röhrenförmigen Bereich der Innenwandung (23) ist.

4. Triebwerk nach einem der Ansprüche 1 bis 3,
**dadurch gekennzeichnet, dass** der Verstärkungsring (26) metallisch ist.

5. Triebwerk nach Anspruch 4,
**dadurch gekennzeichnet, dass** der Verstärkungsring (26) aus Titan ist.

6. Triebwerk nach einem der Ansprüche 1 bis 5,
**dadurch gekennzeichnet, dass** die zweiten Befestigungselemente (27) blind sind.
